# EUROPEAN PATENT APPLICATION

(11) **EP 4 561 018 A1**
(43) Date of publication of application: **28.05.2025**
(21) Application number: 24212620.9
(22) Date of filing: 13.11.2024
(51) Int. Cl.: H04L 67/02, G06F 16/901, H04L 9/40, G06N 3/08, G06N 5/01, G06N 3/045

(54) **APPLICATION PROGRAMING INTERFACE IDENTIFICATION METHOD AND APPARATUS, MEDIUM, AND ELECTRONIC DEVICE**

(30) Priority: 21.11.2023 CN 202311560814
(71) Applicant: Beijing Zitiao Network Technology Co., Ltd., Beijing 100190 (CN)
(72) Inventor: JIA, Haitong, Beijing, 100028 (CN); LI, Hu, Beijing, 100028 (CN); SHAO, Kaiqiang, Beijing, 100028 (CN); XU, Yinfei, Beijing, 100028 (CN); XU, Yixiao, Beijing, 100028 (CN); XU, Zilong, Beijing, 100028 (CN)
(74) Representative: Dentons UK and Middle East LLP

(57) **Abstract**

The present disclosure relates to an application programing interface identification method and apparatus (200), a medium, and an electronic device (600). The method includes: extracting a current API request path from current network traffic; and in response to a target path matching the current API request path existing in a request path tree and an API list not including the target path, adding the target path to the API list, a node belonging to a dynamic parameter in the request path tree is a wildcard node.

## Description

### CROSS-REFERENCE TO RELATED APPLICATION

The present application claims priority of the Chinese Patent Application No. 202311560814.6, filed on November 21, 2023, the disclosure of which is incorporated herein by reference in the present application.

### TECHNICAL FIELD

The present disclosure relates to the field of network security technologies, and in particular, to an application programing interface identification method and apparatus, a medium, and an electronic device.

### BACKGROUND

In today's digital world, application programming interfaces (APIs) play a vital role, as they are the foundation for building and connecting applications, allowing data and functionality to flow between different systems and services. However, with the widespread use of APIs, they have also become a major target of cyber attacks. Therefore, protecting API security has become an important issue, which is crucial for ensuring overall information security of enterprises. Obtaining an accurate and complete API list is a prerequisite for verifying the security of related APIs. In industrial practice, there are many challenges in obtaining a complete API list. The rapid iteration of research and development makes the system more and more complex, which may result in a large number of APIs being scattered in various systems and services. If the maintenance of the API list is highly dependent on manual work, it will bring extremely high maintenance costs.

### SUMMARY

The Summary is to introduce the concepts in a simplified form, which will be described in detail in the section of detailed description later. The summary is neither intended to identify the key features or essential features of the claimed technical solution, nor is it intended to be used to limit the scope of the claimed technical solution.

According to a first aspect, the present disclosure provides an application programing interface identification method, including:
extracting a current application programing interface (API) request path from current network traffic; and
in response to a target path matching the current API request path existing in a request path tree and an API list not including the target path, adding the target path to the API list, the request path tree is a multiway tree that is dynamically updated based on a historical API request path, and a node belonging to a dynamic parameter in the request path tree is a wildcard node.

According to a second aspect, the present disclosure provides an application programing interface identification apparatus, including:
an extraction module, configured to extract a current application programing interface (API) request path from current network traffic; and
a matching module, configured to: in response to a target path matching the current API request path existing in a request path tree and an API list not including the target path, add the target path to the API list, the request path tree is a multiway tree that is dynamically updated based on a historical API request path, and a node belonging to a dynamic parameter in the request path tree is a wildcard node.

According to a third aspect, the present disclosure provides a computer-readable medium, on which computer programs stored, the programs, when executed by a processing apparatus, implement the steps of the application programing interface identification method according to the first aspect of the present disclosure.

According to a fourth aspect, the present disclosure provides an electronic device, including:
a storage apparatus, on which computer programs are stored; and
a processing apparatus, configured to execute the computer programs in the storage apparatus to implement the steps of the application programing interface identification method according to the first aspect of the present disclosure.

Other features and advantages of the present disclosure will be described in detail in the following section of detailed description.

### BRIEF DESCRIPTION OF THE DRAWINGS

The above and other features, advantages, and aspects of embodiments of the present disclosure will become more apparent in conjunction with the drawings and the following specific implementations. Throughout the drawings, the same or similar reference numerals denote the same or similar elements. It should be understood that the drawings are schematic and that parts and elements are not necessarily drawn to scale. In the drawings:
Fig. 1 is a flowchart of an application programing interface identification method according to an example embodiment.
Fig. 2 is a schematic diagram of a structure of a request path tree according to an example embodiment.
Fig. 3 is a schematic diagram of API request path matching according to an example embodiment.
Fig. 4 is a flowchart of an application programing interface identification method according to another example embodiment.
Fig. 5A is a schematic diagram of traversing a request path tree to identify a node belonging to a dynamic parameter in the request path tree according to an example embodiment.
Fig. 5B is a schematic diagram of a structure of a request path tree obtained after a node belonging to a dynamic parameter in Fig. 5A is replaced with a preset character.
Fig. 6 is a schematic diagram of fine-tuning a linear model and an encoder obtained after pre-training according to an API list according to an example embodiment.
Fig. 7 is a block diagram of an application programing interface identification apparatus according to an example embodiment.
Fig. 8 is a schematic diagram of a structure of an electronic device according to an example embodiment.

### DETAILED DESCRIPTION OF EMBODIMENTS

As discussed in background, in industrial practice, there are many challenges in obtaining a complete API list. The rapid iteration of research and development makes the system more and more complex, which may result in a large number of APIs being scattered in various systems and services. If the maintenance of the API list is highly dependent on manual work, it will bring extremely high maintenance costs. To this end, the following methods for extracting the API list with the aid of a computer have emerged:

In a first method, an API list is extracted based on API infrastructure configuration: some teams or enterprises have a unified and API-granular centralized gateway, and the API list may be obtained by extracting a configuration file in the gateway. In this method, the most complete API list may be obtained for services that have accessed the infrastructure. However, in a large enterprise, businesses and teams are complex, code sources are diverse, and infrastructure is various. Each business or even team has its own research and development mode and habit, which may not all be suitable for accessing such a centralized gateway. Even if a similar centralized gateway is accessed, there are challenges of various configuration types and fast iteration of configuration formats, which require continuous adaptation.

In a second method, an API list is extracted based on a structured document of a business team: some teams separately maintain an API structured information document for an API, and the API list is directly parsed from the corresponding document. This method also faces the challenge of integrity in the context of complex infrastructure and diversified teams. Furthermore, the structured document requires additional resource investment from the business team for maintenance, and there is a problem of update delay.

In a third method, an API list is extracted based on network traffic at a Layer 7 gateway: Generally, a large enterprise has a relatively unified Layer 7 proxy gateway (that is, an Open System Interconnect (OSI) seven-layer model). Network traffic is collected based on the Layer 7 proxy gateway, and an API is extracted according to a traffic path. In this implementation, an overall and general traffic collection method may be provided in the context of a complex back-end infrastructure and a complex team research and development mode. However, a large number of businesses contain dynamic parameters in a RESTful interface. Performing extraction based only on path content without secondary processing will lead to severe expansion of the API list (the same API is recorded multiple times in the API list due to containing different dynamic parameters), affecting further analysis and use. A software interface designed based on the Representational State Transfer (REST) concept is called a RESTful (REST-style) interface.

In view of this, the present disclosure provides an application programing interface identification method and apparatus, a medium, and an electronic device.

Embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the drawings and embodiments of the present disclosure are only for illustrative purposes and are not intended to limit the scope of protection of the present disclosure.

It should be understood that the various steps described in the method implementations of the present disclosure may be performed in different orders, and/or performed in parallel. In addition, additional steps may be included and/or the execution of the illustrated steps may be omitted in the method implementations. The scope of the present disclosure is not limited in this respect.

The term "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms are given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers of "one" and "a plurality of' mentioned in the present disclosure are illustrative rather than restrictive, and those skilled in the art should understand that unless the context clearly indicates otherwise, it should be understood as "one or more".

Names of messages or information exchanged between a plurality of apparatuses in the implementations of the present disclosure are for illustrative purposes only, and are not used to limit the scope of these messages or information.

It may be understood that before the technical solutions disclosed in the embodiments of the present disclosure are used, the user shall be informed of the types, scope of use, and usage scenarios of personal information involved in the present disclosure and the user's authorization shall be obtained through an appropriate manner in accordance with relevant laws and regulations.

For example, when receiving an active request from a user, a prompt message is sent to the user to explicitly prompt the user that the operation requested by the user needs to obtain and use the user's personal information. Therefore, the user can choose whether to provide personal information to software or hardware such as an electronic device, an application, a server, or a storage medium that executes an operation of the technical solution of the present disclosure according to the prompt information.

As an optional but non-limiting implementation, the manner of sending the prompt message to the user in response to receiving the active request from the user may be, for example, a pop-up window, and the prompt message may be presented in the pop-up window in a text manner. In addition, the pop-up window may also carry a selection control for the user to select "Agree" or "Disagree" to provide personal information to the electronic device.

It may be understood that the above notification and user authorization process are only illustrative and do not limit the implementation of the present disclosure. Other manners that meet relevant laws and regulations may also be applied to the implementations of the present disclosure.

Furthermore, it may be understood that data involved in the technical solution (including but not limited to the data itself, the acquisition or use of the data) shall comply with the requirements of corresponding laws, regulations, and relevant provisions.

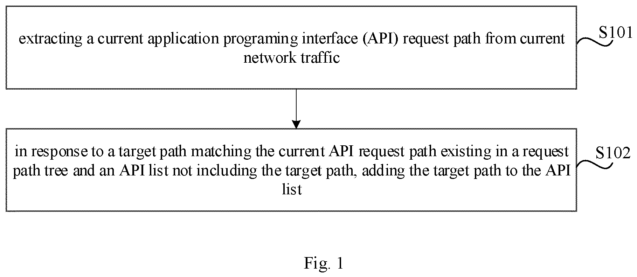

Fig. 1 is a flowchart of an application programing interface identification method according to an example embodiment. The application programing interface identification method may be applied to an electronic device such as a client or a server. As shown in Fig. 1, the application programing interface identification method may include the following S101 and S102.

In S101, a current application programing interface (API) request path is extracted from current network traffic.

In the present disclosure, network traffic is the total amount of data packets passing through a network link per unit time, and is a basic indicator for measuring network load and forwarding performance. Hyper Text Transfer Protocol (HTTP) traffic is a type of network traffic. The HTTP traffic may be traffic generated by calling an API, or may be HTTP background traffic. In order to better manage the API, it is necessary to identify the API used from the HTTP traffic.

Here, the network traffic is traffic to be identified for the API, that is, whether the network traffic includes an API and whether the API included in the network traffic is a known API in the API list or an unknown API outside the API list. In an embodiment, the network traffic is HTTP traffic.

An embodiment of the present disclosure may perform network traffic collection based on a Layer 7 proxy gateway. The network traffic may be collected by an execution subject of the embodiment of the present disclosure, or may be collected by another device and then sent by the other device to the execution subject of the embodiment of the present disclosure.

After the current network traffic is obtained, a uniform resource locator (URL) including the current API request path may be first extracted from the current network traffic, and then the current API request path is separated from the URL.

For example, the URL including the current API request path extracted from the current network traffic is https://mydoc.com/docx/Th8vd5cO1oaFW0x39mbc1oUXnDe, and then the current API request path "/docx/Th8vdScO1oaFWOx39mbc1oUXnDe" is separated from the URL. The URL is sequentially formed by combining a protocol, a domain name, and a path, where "https://" is the protocol, "mydoc.com" is the domain name, and "/docx/Th8vdScO1oaFWOx39mbc1oUXnDe" is the path.

In S102, in response to a target path matching the current API request path existing in a request path tree and an API list not including the target path, the target path is added to the API list.

In the present disclosure, the request path tree is a multiway tree that is dynamically updated based on a historical API request path, and a node belonging to a dynamic parameter in the request path tree is a wildcard node. A root node of the request path tree is empty, and other nodes are path nodes on a request path. Any path node on the request path is a parent node of an adjacent downstream path node.

There are two types of nodes in the request path tree: a static character node and a generic matching node (also referred to as a wildcard node). The static character node is formed by path parsing and is represented by a character string. A node type of the static character node is a nonwildcard type. The wildcard node is a node belonging to a dynamic parameter and is represented by a preset character (for example, "*", "?", "#", "&", or the like). The node type of the wildcard node is a wildcard node. The wildcard node has wildcard matching logic, and when path matching is performed, the wildcard node is matched according to the wildcard.

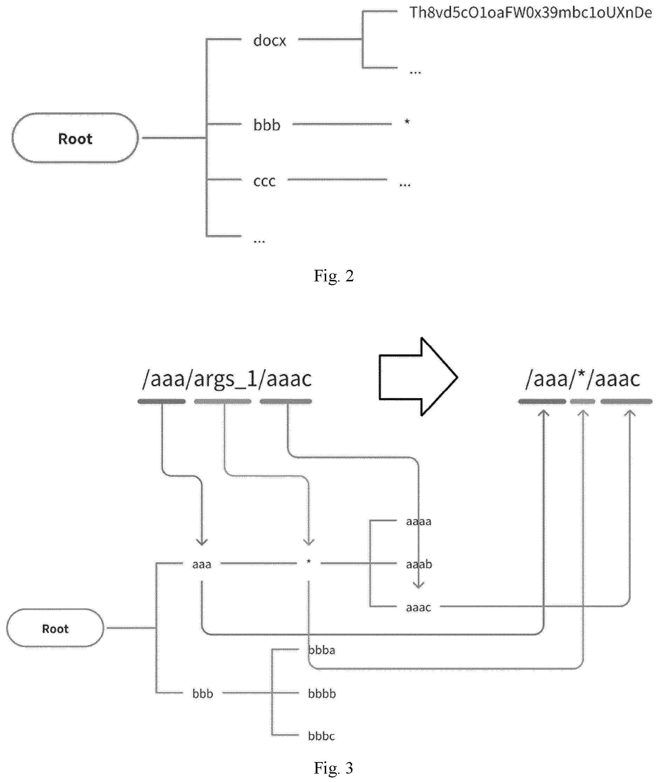

For example, a path formed by the request path "/docx/Th8vd5cO1oaFW0x39mbc1oUXnDe" in the request path tree is "Root→docx→Th8vd5cO1oaFW0x39mbc1oUXnDe" (as shown in Fig. 2).

In the present disclosure, whether a target path matching the current API request path exists in the request path tree may be determined by traversing the request path tree. As shown in Fig. 3, assuming that the request path tree stores a path "Root-aaa-*-aaac" and the current API request path is "/aaa/args_1/aaac", the target path "Root-aaa-*-aaac" matching the current API request path may be obtained by matching the current API request path with the request path tree. In this case, if the API list does not include the target path, the target path "Root-aaa-*-aaac" may be added to the API list, and then real-time network traffic is continuously monitored to perform real-time API identification. If the API list includes the target path, the target path does not need to be added repeatedly, and real-time network traffic may be continuously monitored to perform real-time API identification.

In the above technical solution, the current API request path is extracted from the current network traffic; and in response to the target path matching the current API request path existing in the request path tree and an API list not including the target path, the target path is added to the API list. In this way, the API list may be updated in real time based on the current API request, which may ensure not only the real-time performance but also the integrity of the API list, thereby implementing accurate and automatic maintenance of the API list and saving manual maintenance costs. In addition, the node belonging to the dynamic parameter in the request path tree is the wildcard node. In this way, different paths of the same API that contains different dynamic parameters are recorded only once in the API list, which may ensure that the API list is accurate and non-redundant.

If a business system is large, the corresponding request path tree is generally large. If whether a target path matching the current API request path exists in the request path tree is determined by traversing the request path tree, the path matching efficiency is not high, thus affecting the API identification efficiency. To this end, the business system may be divided into a plurality of sites according to the domain name, where each of the plurality of sites corresponds to at least one domain name. Correspondingly, the request path tree may include a plurality of request path subtrees respectively corresponding to the plurality of sites, where the request path subtrees corresponding to the sites are independent of each other and do not affect each other. In this case, whether a target path matching the current API request path exists in the request path tree may be determined in the following manner:

After the current API request is extracted, a target domain name in a URL where the current API request path is located is first determined. In response to a request path subtree corresponding to a target site including a path matching the current API request path, it is determined that the target path exists in the request path tree, where the target site is a site that corresponds to the target domain name in the plurality of sites.

In the above implementation, the target site corresponding to the API request path is first found, and then the path matching the current API request path is found by traversing the request path subtree corresponding to the target site, which may improve the path matching efficiency, thereby improving the API identification efficiency.

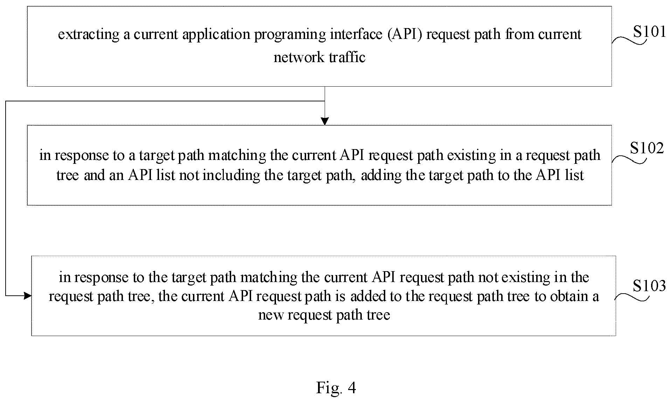

Fig. 4 is a flowchart of an application programing interface identification method according to another example embodiment. As shown in Fig. 4, the above method may further include the following S103.

In S103, in response to the target path matching the current API request path not existing in the request path tree, the current API request path is added to the request path tree to obtain a new request path tree.

In the present disclosure, the current API request path may be added to the request path tree in the following manner: the request path may be first divided into path nodes, and then the path nodes are added to the request path tree according to a positional relationship of each path node in the current API request path. In the new request path tree, any path node on the current API request path is a parent node of an adjacent downstream path node.

When the request path tree includes a plurality of request path subtrees respectively corresponding to a plurality of sites, the current API request path may be added to the request path tree in the following manner:
a target domain name in a uniform resource locator where the current API request path is located is first determined; and then the current API request path is added to a request path tree corresponding to a target site, where the target site is a site that corresponds to the target domain name in the plurality of sites.

When the target path matching the current API request path not exists in the request path tree, the current API request path may be temporarily not added to the API list, but added to the request path tree, so that in the later stage, whether the current API request path includes a dynamic parameter may be determined in a regular traversal manner, and if the current API request path includes the dynamic parameter, a path node belonging to the dynamic parameter is replaced with a preset character. In this way, if a subsequent request path matches a path obtained after the preset character is replaced, the path obtained after the preset character is replaced may be added to the API list. In this way, different paths of the same API that contains different dynamic parameters are recorded only once in the API list, which may ensure that the API list is accurate and non-redundant.

When the target path matching the current API request path not exists in the request path tree, the current API request path is added to the request path tree. In this way, the request path tree is dynamically updated. An added API request path in the request path tree may include the dynamic parameter. Therefore, the request path tree may be traversed at regular intervals to identify a node belonging to the dynamic parameter and replace the node with the preset character, so as to continuously maintain the dynamically updated request path tree, so that a matched path can be added to the API list in time, thereby minimizing the delay of the API list update. Specifically, the above method may further include the following two steps:
traversing the request path tree at a first preset period to identify the node belonging to the dynamic parameter in the request path tree; and
replacing the node belonging to the dynamic parameter in the request path tree with a preset character.

In the present disclosure, when the request path tree includes a plurality of request path subtrees respectively corresponding to a plurality of sites, the request path subtrees corresponding to the plurality of sites may be traversed in parallel at the first preset period.

The following is a detailed description of the specific implementation of traversing the request path tree at the first preset period. Specifically, it may be implemented in a plurality of implementation manners. In an implementation manner, the dynamic parameter may include any one of a number, a string starting with a number, a universally unique identifier (UUID), an MD5 code, a random string, a string representing a user name, and a string with insignificant features. For each node in the request path tree, it is determined whether all child nodes of the node include any one of a number, a string starting with a number, a UUID, an MD5 code, a random string, a string representing a user name, and a string with insignificant features. In response to the child nodes of the node including any one of the dynamic parameters, it is determined that all the child nodes of the node belong to the dynamic parameter. The presence of a random string in all the child nodes of the node may be determined by using a hidden Markov random string algorithm.

In another implementation manner, the request path tree may be traversed at the first preset period by using a pre-trained deep learning model, that is, the node belonging to the dynamic parameter in the request path tree is identified by using the deep learning model. In this way, the node belonging to the dynamic parameter in the request path tree may be conveniently and quickly identified by using the deep learning model.

Specifically, the deep learning model may traverse the request path tree by using the following steps (1) to (3) to identify the node belonging to the dynamic parameter in the request path tree:
Step (1): for each node in the request path tree, after all child nodes of the node are spliced, inputting all the child nodes of the node to the deep learning model to determine whether the child nodes of the node include the dynamic parameter.

In the present disclosure, all the child nodes of a node have the same attribute of whether they belong to a dynamic parameter, that is, all the child nodes of a node either do not belong to a dynamic parameter or all belong to a dynamic parameter. Therefore, the deep learning model determines whether the child nodes of the node include the dynamic parameter by determining whether a spliced string includes a dynamic parameter, where the spliced string is a string obtained after all the child nodes of the node are spliced.

Step (2): in response to the child nodes of the node including the dynamic parameter, determine that all the child nodes of the node belong to the dynamic parameter.

Step (3): in response to the child nodes of the node not including the dynamic parameter, determine that all the child nodes of the node do not belong to the dynamic parameter.

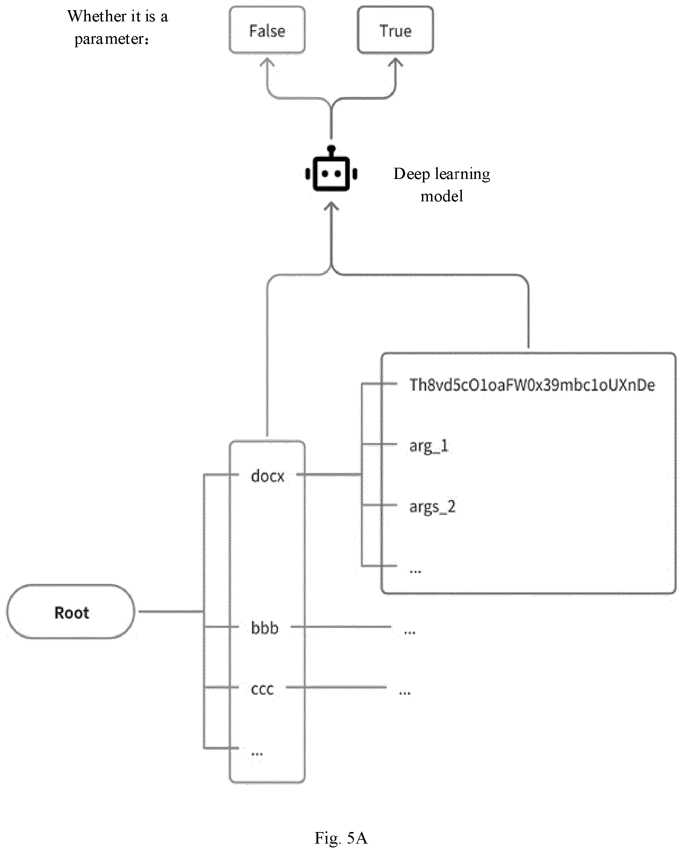

For example, as shown in Fig. 5A, for a root node, after all child nodes of a root node are spliced, all the child nodes of the root node (that is, the second-layer node of the request path tree) may be input to the deep learning model to determine whether the child nodes of the root node include the dynamic parameter. An output result of the deep learning model is False, indicating that the child nodes of the root node do not include the dynamic parameter. In this case, preset character replacement is not performed.

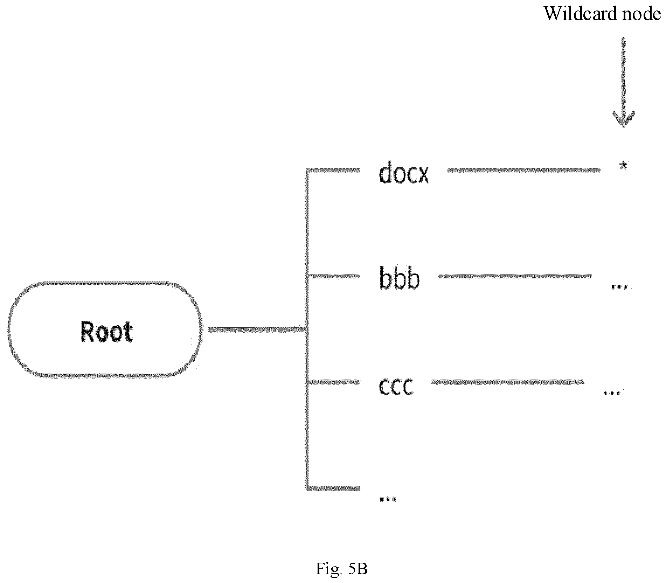

For the "docx" node in Fig. 5A, it is first determined that all the child nodes of the "docx" node (including a "Th8vd5cO1oaFW0x39mbc1oUXnDe" node, an "arg_1" node, an "args_2" node,...), after spliced, are input to the deep learning model to determine whether the child nodes of the "docx" node include the dynamic parameter. An output result of the deep learning model is True, indicating that the child nodes of the "docx" node include the dynamic parameter. In this case, all the child nodes of the "docx" node may be replaced with a preset character "*" to obtain the request path tree shown in Fig. 5B.

In an initial operation stage of a business system, the deep learning model may be trained according to the API list. Since the API list contains fewer paths in the initial stage and there are fewer training samples, the recognition accuracy of the dynamic parameter of the deep learning model is not high. The API list is dynamically updated, and it contains more and more paths. Correspondingly, there are more and more training samples. Therefore, the deep learning model may be updated at regular intervals according to the API list to improve the recognition accuracy of the dynamic parameter of the deep learning model, thereby ensuring that the API list is accurate and non-redundant. Specifically, the above application programing interface identification method may further include the following step:
updating the deep learning model according to the API list at a second preset period.

Specifically, the deep learning model may be updated at regular intervals by using the following steps (a) to (d):
Step (a): obtaining a current API list at a second preset period.
Step (b): replacing preset characters in the current API list with original characters before replacement to obtain a reference API list.

For example, a path in the current API list is "aaa-*-aaac", which is obtained by replacing a path node "args_1" in a path "aaa→args_1→aaac" with a preset character "*". In this case, the preset character "*" in the path "aaa-*-aaac" in the API list may be replaced with the original character "args_1" before replacement.

Step (c): For each reference path of at least part of reference paths in the reference API list, determining label information of at least part of path nodes on the reference path.

In the present disclosure, for each reference path of part of reference paths in the reference API list, label information of part of path nodes or all path nodes on the reference path may be determined, or for each reference path in the reference API list, label information of part of path nodes or all path nodes on the reference path may be determined.

The label information is used for representing whether a corresponding path node belongs to the dynamic parameter. For example, if the path node belongs to the dynamic parameter, the label information of the path node may be represented by 1; and if the path node does not belong to the dynamic parameter, the label information of the path node may be represented by 0.

Specifically, the label information of a node that is a preset character before replacement is that the node belongs to the dynamic parameter, and the label information of another node is that the node does not belong to the dynamic parameter.

Step (d): training the deep learning model by using each piece of the label information and a path node corresponding to each piece of the label information as training samples.

Specifically, for each path node corresponding to each piece of label information, model training may be performed by using the path node as an input of the deep learning model and using the label information of the path node as a target output of the deep learning model, to obtain the deep learning model.

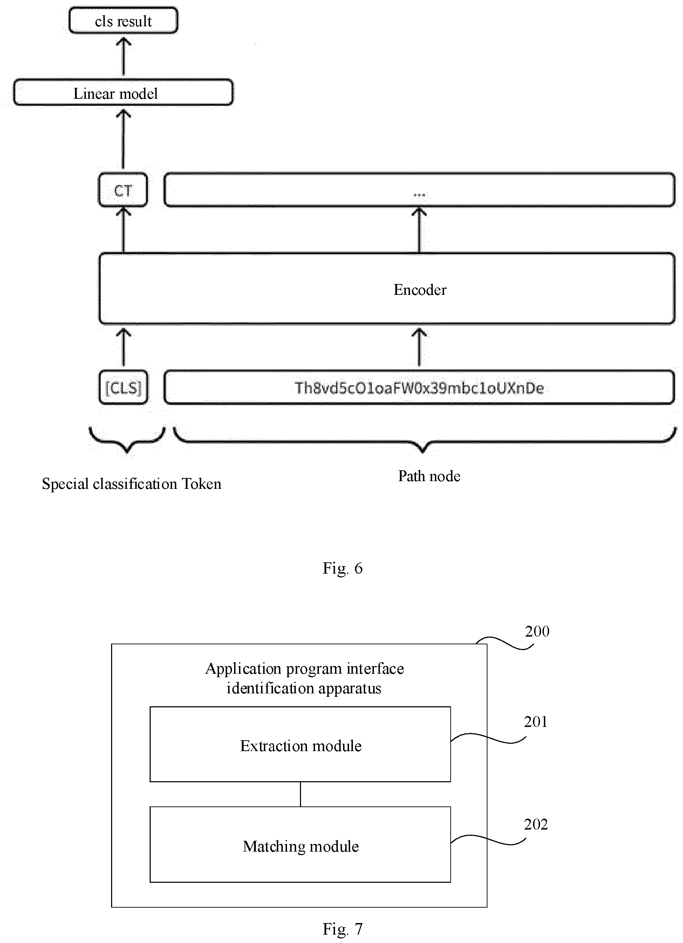

The following is a detailed description of a training manner of the deep learning model in the initial operation stage of the business system. In an implementation manner, as shown in Fig. 6, the deep learning model may include an encoder of a sequence model Transformer based on an attention mechanism and a linear model.

Firstly, an open-source corpus (for example, an English corpus) may be used to pre-train the encoder in a mask language model (Mask LM) manner. Then, the encoder obtained after pre-training is fine-tuned according to the API list.

The encoder obtained after pre-training may be fine-tuned according to the API list in a similar manner to the above update of the deep learning model, where the parameters of the linear model are also updated in the model fine-tuning stage and the update of the node.

The path node input to the model needs to be segmented first, and then the word segmentation result is input to the deep learning model. Since the word segmentation manner in the request path is different from a common natural language and there is no natural word delimiter, a conventional word-based word segmentation manner cannot perform good word segmentation on this type of text. Furthermore, common word segmentation manners in the request path are also different. Therefore, word segmentation may be performed based on morphemes.

As shown in Fig. 6, when the encoder obtained after pre-training is fine-tuned, an output result (that is, CT) corresponding to a position of a classification token [CLS] is used, and the output result is input to the linear model to obtain a final classification result (cls result).

Fig. 7 is a block diagram of an application programing interface identification apparatus according to an example embodiment. As shown in Fig. 7, the apparatus 200 includes:
an extraction module 201, configured to extract a current application programing interface (API) request path from current network traffic; and
a matching module 202, configured to: in response to a target path matching the current API request path existing in a request path tree and an API list not including the target path, add the target path to the API list, the request path tree is a multiway tree that is dynamically updated based on a historical API request path, and a node belonging to a dynamic parameter in the request path tree is a wildcard node.

In the above technical solution, the current API request path is extracted from the current network traffic; and in response to the target path matching the current API request path existing in the request path tree and an API list not including the target path, the target path is added to the API list. In this way, the API list may be updated in real time based on the current API request, which may ensure not only the real-time performance but also the integrity of the API list, thereby implementing accurate and automatic maintenance of the API list and saving manual maintenance costs. In addition, the node belonging to the dynamic parameter in the request path tree is the wildcard node. In this way, different paths of the same API that contains different dynamic parameters are recorded only once in the API list, which may ensure that the API list is accurate and non-redundant.

Optionally, the apparatus 200 further includes:
an adding module, configured to: in response to the target path not existing in the request path tree, add the current API request path to the request path tree to obtain a new request path tree, in the new request path tree, any path node on the current API request path is a parent node of an adjacent downstream path node.

Optionally, the apparatus 200 further includes:
a traversing module, configured to traverse the request path tree at a first preset period to identify the node belonging to the dynamic parameter in the request path tree; and
a replacement module, configured to replace the node belonging to the dynamic parameter in the request path tree with a preset character.

Optionally, the traversing module is configured to traverse the request path tree at the first preset period by using a pre-trained deep learning model.

Optionally, the deep learning model traverses the request path tree in the following manner:
for each node in the request path tree, after all child nodes of the node are spliced, inputting all the child nodes of the node to the deep learning model to determine whether the child nodes of the node include the dynamic parameter; and
in response to the child nodes of the node including the dynamic parameter, determining that all the child nodes of the node belong to the dynamic parameter.

Optionally, the apparatus 200 further includes:
an update module, configured to update the deep learning model according to the API list at a second preset period.

Optionally, the update module includes:
an obtaining submodule, configured to obtain a current API list at a second preset period;
a replacement submodule, configured to replace preset characters in the current API list with original characters before replacement to obtain a reference API list;
a determination submodule, configured to: for each reference path of at least part of reference paths in the reference API list, determine label information of at least part of path nodes on the reference path, the label information is used for representing whether a corresponding path node belongs to the dynamic parameter; and
a training submodule, configured to train the deep learning model by using each piece of the label information and a path node corresponding to each piece of the label information as training samples.

Optionally, the request path tree includes a plurality of request path subtrees respectively corresponding to a plurality of sites, where each of the plurality of sites corresponds to at least one domain name; and
the apparatus 200 further includes:
a first determination module, configured to, after the current API request is extracted, determine a target domain name in a uniform resource locator where the current API request path is located; and
a second determination module, configured to: in response to a request path subtree corresponding to a target site including a path matching the current API request path, determine that the target path exists in the request path tree, where the target site is a site that corresponds to the target domain name in the plurality of sites.

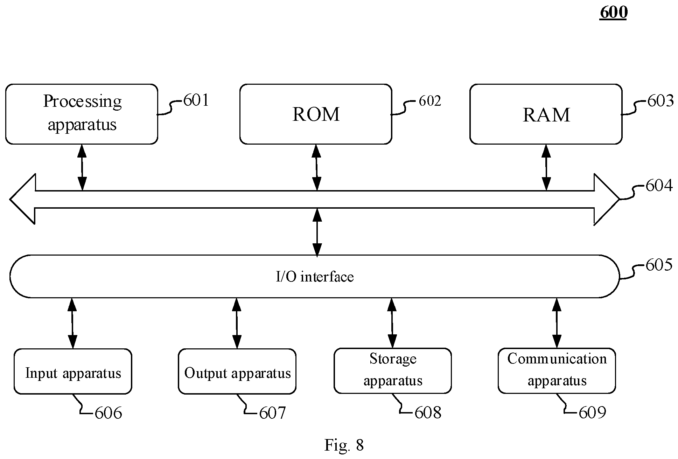

Reference is made to Fig. 8 below, which is a schematic diagram of a structure of an electronic device (for example, a terminal device or a server) 600 suitable for implementing an embodiment of the present disclosure. The terminal device in this embodiment of the present disclosure may include, but is not limited to, mobile terminals such as a mobile phone, a notebook computer, a digital broadcast receiver, a personal digital assistant (PDA), a tablet computer (PAD), and a portable multimedia player (PMP), and fixed terminals such as a digital TV and a desktop computer. The electronic device shown in Fig. 8 is merely an example, and shall not impose any limitation on the function and scope of use of the embodiments of the present disclosure.

As shown in Fig. 8, the electronic device 600 may include a processing apparatus (for example, a central processing unit, a graphics processing unit, etc.) 601 that may perform various appropriate actions and processing in accordance with a program stored in a read-only memory (ROM) 602 or a program loaded from a storage apparatus 608 into a random access memory (RAM) 603. The RAM 603 further stores various programs and data required for the operation of the electronic device 600. The processing apparatus 601, the ROM 602, and the RAM 603 are connected to each other through a bus 604. An input/output (I/O) interface 605 is also connected to the bus 604.

Generally, the following apparatuses may be connected to the I/O interface 605: an input apparatus 606 including, for example, a touch screen, a touchpad, a keyboard, a mouse, a camera, a microphone, an accelerometer, and a gyroscope; an output apparatus 607 including, for example, a liquid crystal display (LCD), a speaker, and a vibrator; the storage apparatus 608 including, for example, a tape and a hard disk; and a communication apparatus 609. The communication apparatus 609 may allow the electronic device 600 to perform wireless or wired communication with other devices to exchange data. Although Fig. 8 shows the electronic device 600 having various apparatuses, it should be understood that it is not required to implement or have all of the shown apparatuses. It may be an alternative to implement or have more or fewer apparatuses.

In particular, according to an embodiment of the present disclosure, the process described above with reference to the flowcharts may be implemented as a computer software program. For example, this embodiment of the present disclosure includes a computer program product, which includes a computer program carried on a non-transitory computer-readable medium, where the computer program includes program code for performing the method shown in the flowchart. In such an embodiment, the computer program may be downloaded from a network through the communication apparatus 609 and installed, installed from the storage apparatus 608, or installed from the ROM 602. When the computer program is executed by the processing apparatus 601, the above-mentioned functions defined in the method of the embodiment of the present disclosure are performed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM or flash memory), an optic fiber, a portable compact disk read-only memory (CD-ROM), an optical storage device, a magnetic storage device, or any suitable combination thereof. In the present disclosure, the computer-readable storage medium may be any tangible medium containing or storing a program that may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, the client and the server may communicate using any currently known or future-developed network protocol such as a hypertext transfer protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to: extract a current application programing interface (API) request path from current network traffic; and in response to a target path matching the current API request path existing in a request path tree and an API list not including the target path, add the target path to the API list, the request path tree is a multiway tree that is dynamically updated based on a historical API request path, and a node belonging to a dynamic parameter in the request path tree is a wildcard node.

The computer program code for performing the operations of the present disclosure may be written in one or more programming languages or a combination thereof, where the programming languages include but are not limited to an object-oriented programming language, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the circumstance involving the remote computer, the remote computer may be connected to the computer of the user over any type of network, including a local area network (LAN) or a wide area network (WAN), or may be connected to an external computer (for example, connected over the Internet using an Internet service provider).

The flowcharts and block diagrams in the drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in a sequence different from that marked in the drawings. For example, two blocks shown in succession may actually be executed substantially in parallel, or they may sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The modules involved in the embodiments described in the present disclosure may be implemented by means of software or hardware. The name of the module does not constitute a limitation on the module itself in some cases. For example, the extraction module may also be described as "a module that extracts a current application programing interface (API) request path from current network traffic".

The functions described herein above in the present disclosure may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system on chip (SOC), a complex programmable logic device (CPLD), and the like.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination thereof. A more specific example of the machine-readable storage medium may include an electrical connection based on one or more wires, a portable computer disk, a hard disk, a random access memory (RAM), a read-only memory (ROM), an erasable programmable read-only memory (EPROM or flash memory), an optic fiber, a portable compact disk read-only memory (CD-ROM), an optical storage device, a magnetic storage device, or any suitable combination thereof.

According to one or more embodiments of the present disclosure, Example 1 provides an application programing interface identification method, including:
extracting a current application programing interface (API) request path from current network traffic; and
in response to a target path matching the current API request path existing in a request path tree and an API list not including the target path, adding the target path to the API list, the request path tree is a multiway tree that is dynamically updated based on a historical API request path, and a node belonging to a dynamic parameter in the request path tree is a wildcard node.

According to one or more embodiments of the present disclosure, Example 2 provides the method according to Example 1, where the method further includes:
in response to the target path not existing in the request path tree, adding the current API request path to the request path tree to obtain a new request path tree, in the new request path tree, any path node on the current API request path is a parent node of an adjacent downstream path node.

According to one or more embodiments of the present disclosure, Example 3 provides the method according to Example 2, where the method further includes:
traversing the request path tree at a first preset period to identify the node belonging to the dynamic parameter in the request path tree; and
replacing the node belonging to the dynamic parameter in the request path tree with a preset character.

According to one or more embodiments of the present disclosure, Example 4 provides the method according to Example 3, where the traversing the request path tree at a first preset period includes:
traversing the request path tree at the first preset period by using a pre-trained deep learning model.

According to one or more embodiments of the present disclosure, Example 5 provides the method according to Example 4, where the deep learning model traverses the request path tree in the following manner:

for each node in the request path tree, after all child nodes of the node are spliced, inputting all the child nodes of the node to the deep learning model to determine whether the child nodes of the node include the dynamic parameter; and
in response to the child nodes of the node including the dynamic parameter, determining that all the child nodes of the node belong to the dynamic parameter.

According to one or more embodiments of the present disclosure, Example 6 provides the method according to Example 4, where the method further includes:
updating the deep learning model according to the API list at a second preset period.

According to one or more embodiments of the present disclosure, Example 7 provides the method according to Example 6, where the updating the deep learning model according to the API list at a second preset period includes:
obtaining a current API list at a second preset period;
replacing preset characters in the current API list with original characters before replacement to obtain a reference API list;
for each reference path of at least part of reference paths in the reference API list, determining label information of at least part of path nodes on the reference path, where the label information is used for representing whether a corresponding path node belongs to the dynamic parameter; and
training the deep learning model by using each piece of the label information and a path node corresponding to each piece of the label information as training samples.

According to one or more embodiments of the present disclosure, Example 8 provides the method according to any one of Examples 1 to 7, where the request path tree includes a plurality of request path subtrees respectively corresponding to a plurality of sites, where each of the plurality of sites corresponds to at least one domain name; and
the method further includes:
after the current API request is extracted, determining a target domain name in a uniform resource locator where the current API request path is located; and
in response to a request path subtree corresponding to a target site including a path matching the current API request path, determining that the target path exists in the request path tree, where the target site is a site that corresponds to the target domain name in the plurality of sites.

According to one or more embodiments of the present disclosure, Example 9 provides an application programing interface identification apparatus, including:
an extraction module, configured to extract a current application programing interface (API) request path from current network traffic; and
a matching module, configured to: in response to a target path matching the current API request path existing in a request path tree and an API list not including the target path, add the target path to the API list, the request path tree is a multiway tree that is dynamically updated based on a historical API request path, and a node belonging to a dynamic parameter in the request path tree is a wildcard node.

According to one or more embodiments of the present disclosure, Example 10 provides a computer-readable medium, on which computer programs are stored, the programs, when executed by a processing apparatus, implement the steps of the method according to any one of Examples 1 to 8.

According to one or more embodiments of the present disclosure, Example 11 provides an electronic device, including:
a storage apparatus, on which computer programs are stored; and
a processing apparatus configured to execute the computer programs in the storage apparatus to implement the steps of the method according to any one of Examples 1 to 8.

The foregoing descriptions are merely preferred embodiments of the present disclosure and explanations of the applied technical principles. Persons skilled in the art should understand that the scope of disclosure involved in the present disclosure is not limited to the technical solution formed by a specific combination of the foregoing technical features, and shall also cover other technical solutions formed by any combination of the foregoing technical features or equivalent features thereof without departing from the foregoing concept of disclosure. For example, a technical solution formed by replacement with technical features with similar functions disclosed in the present disclosure (but not limited to) is also within the scope of the present disclosure.

In addition, although various operations are described in a specific order, it should be understood as requiring these operations to be performed in the specific order shown or in a sequential order. Under specific circumstances, multitasking and parallel processing may be advantageous. Similarly, although several specific implementation details are included in the foregoing discussions, these details should not be construed as limiting the scope of the present disclosure. Some features that are described in the context of separate embodiments may also be implemented in combination in a single embodiment. In contrast, various features described in the context of a single embodiment may also be implemented in a plurality of embodiments individually or in any suitable subcombination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims. For the apparatus in the foregoing embodiments, the specific manner in which each module performs an operation has been described in detail in the embodiments related to the method, and will not be described in detail herein.

## Claims

1. An application programing interface identification method, comprising:
extracting a current application programing interface (API) request path from current network traffic; and
in response to a target path matching the current API request path existing in a request path tree and an API list not including the target path, adding the target path to the API list, wherein the request path tree is a multiway tree that is dynamically updated based on a historical API request path, and a node belonging to a dynamic parameter in the request path tree is a wildcard node.

2. The method according to claim 1, wherein the method further comprises:
in response to the target path not existing in the request path tree, adding the current API request path to the request path tree to obtain a new request path tree, wherein in the new request path tree, any path node on the current API request path is a parent node of an adjacent downstream path node.

3. The method according to claim 2, wherein the method further comprises:
traversing the request path tree at a first preset period to identify the node belonging to the dynamic parameter in the request path tree; and
replacing the node belonging to the dynamic parameter in the request path tree with a preset character.

4. The method according to claim 3, wherein the traversing the request path tree at the first preset period comprises:
traversing the request path tree at the first preset period by using a pre-trained deep learning model.

5. The method according to claim 4, wherein the deep learning model traverses the request path tree in a following manner:
for each node in the request path tree, after all child nodes of the node are spliced, inputting all the child nodes of the node to the deep learning model to determine whether all child nodes of the node include the dynamic parameter; and
in response to the child nodes of the node including the dynamic parameter, determining that all the child nodes of the node belong to the dynamic parameter.

6. The method according to claim 4 or 5, wherein the method further comprises:
updating the deep learning model according to the API list at a second preset period.

7. The method according to claim 6, wherein the updating the deep learning model according to the API list at the second preset period comprises:
obtaining a current API list at the second preset period;
replacing preset characters in the current API list with original characters before replacement to obtain a reference API list;
for each reference path of at least part of reference paths in the reference API list, determining label information of at least part of path nodes on the reference path, wherein the label information is used for representing whether a corresponding path node belongs to the dynamic parameter; and
training the deep learning model by using each piece of the label information and a path node corresponding to each piece of the label information as training samples.

8. The method according to any one of claims 1 to 7, wherein the request path tree comprises a plurality of request path subtrees respectively corresponding to a plurality of sites, wherein each of the plurality of sites corresponds to at least one domain name; and
the method further comprises:
after a current API request is extracted, determining a target domain name in a uniform resource locator where the current API request path is located; and
in response to a request path subtree corresponding to a target site including a path matching the current API request path, determining that the target path exists in the request path tree, wherein the target site is a site that corresponds to the target domain name in the plurality of sites.

9. An application programing interface identification apparatus (200), comprising:
an extraction module (201), configured to extract a current application programing interface (API) request path from current network traffic; and
a matching module (202), configured to: in response to a target path matching the current API request path existing in a request path tree and an API list not including the target path, add the target path to the API list, wherein the request path tree is a multiway tree that is dynamically updated based on a historical API request path, and a node belonging to a dynamic parameter in the request path tree is a wildcard node.

10. A computer-readable medium, on which computer programs are stored, wherein the programs, when executed by a processing apparatus, implement steps of the method according to any one of claims 1 to 8.

11. An electronic device (600), comprising:
a storage apparatus (608), on which computer programs are stored; and
a processing apparatus (601), configured to execute the computer programs in the storage apparatus (608) to implement steps of the method according to any one of claims 1 to 8.
